# FASCICULE DE BREVET EUROPEEN

(11) **EP 2 687 398 B1**
(45) Date de publication et mention de la délivrance du brevet: **11.07.2018**
(21) Numéro de dépôt: 13176735.2
(22) Date de dépôt: 16.07.2013
(51) Int. Cl.: B60M 1/20, B60M 1/24

(54) **Dispositif de suspension d'un câble porteur de caténaire**
Aufhängevorrichtung für ein Oberleitungstragseil
Device for hanging a catenary carrying cable

(30) Priorité: 18.07.2012 FR 1256930
(43) Date de publication de la demande: 22.01.2014
(73) Titulaire: SNCF RESEAU, 93418 La Plaine Saint-Denis CEDEX (FR)
(72) Inventeur: Gouverneur, Claude, 28190 MITTAINVILLIERS (FR)
(74) Mandataire: Argyma

(56) Documents cités:
- EP-A1- 0 889 568
- WO-A1-03/094315
- JP-A- 6 171 404
- US-A- 2 775 422

## Description

La présente invention concerne le domaine des installations ferroviaires et, plus particulièrement, celui des équipements pour l'alimentation en courant électrique des locomotrices circulant sur les voies.

Dans le but de transmettre du courant électrique aux trains circulant sur une voie ferrée, un fil conducteur appelé fil de contact est disposé au-dessus de la voie ferrée. Il alimente en courant des pantographes qui sont situés sur la partie supérieure de la locomotrice. Un pantographe est un dispositif qui permet à une locomotrice électrique de capter le courant par frottement sur le fil de contact.

Afin de supporter le fil de contact au-dessus de la voie ferrée, des poteaux supports sont disposés, de loin en loin le long de la voie. Ils comportent, chacun, un système de maintien du fil de contact comprenant un hauban et une console, placés en porte à faux par rapport au poteau support et disposés de façon à former un triangle dans un plan vertical au niveau de la partie supérieure du poteau.

Un fil de contact seul tendu entre deux poteaux consécutifs, qui peuvent être relativement éloignés l'un de l'autre, forme une Ligne de Contact Simple (LCS) avec une faible souplesse du plan de contact. Or le captage du courant aux vitesses élevées (supérieure à 110km/h) nécessite que la ligne de contact simple offre une souplesse adéquate. A des vitesses classiques, ce manque de souplesse provoquera un captage totalement dégradé qui aura pour conséquence de générer des arcs électrique qui détérioreront le fil de contact et entraîneront sa rupture. Et surtout, à grande vitesse, la relation pantographe et fil conducteur ne pourra pas être assurée.

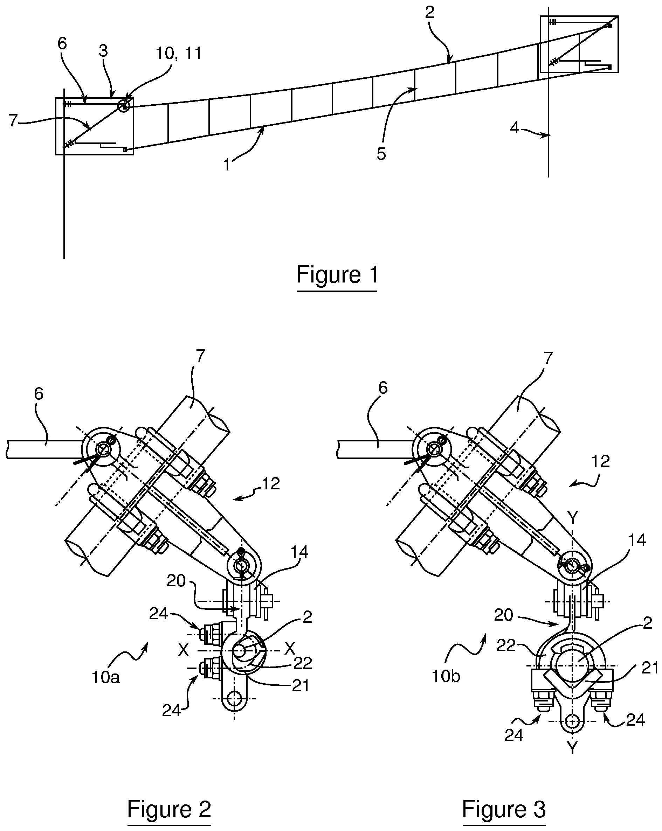

Une solution connue, illustrée par la figure 1, consiste à suspendre le fil de contact 1 à un câble porteur 2 qui est, lui, suspendu à chaque poteau 4 par l'intermédiaire du système de maintien 3 et qui prend une forme arquée entre deux poteaux 4 consécutifs. Le fil de contact 1 est alors suspendu au câble porteur 2 par l'intermédiaire d'une succession de câbles verticaux 5, dénommés pendules, dont les longueurs sont adaptées pour maintenir le fil de contact 1 sensiblement horizontal entre les poteaux 4. L'ensemble formé par le fil de contact 1, le câble porteur 2 et les pendules 5 est dénommé caténaire (ou Ligne Aérienne de Contact).

Comme illustré par la figure 1, le système de maintien 3 d'une caténaire comprend un hauban 6, une console 7 et un dispositif de suspension 10 agencé pour relier le hauban 6, la console 7 et le câble porteur 2.

Deux dispositifs de suspension 10a et 10b connus, illustrés respectivement par les figures 2 et 3, comprennent chacun une pièce d'attache 12 du hauban 6 et de la console 7 et un support de câble 20 comprenant une portion de réception 21 de section transversale arrondie ou coudée formant une gorge dans laquelle repose le câble porteur 2, le support 20 étant relié à la pièce d'attache 12 par un cardan 14. Afin de solidariser le câble porteur 2 sur le support de câble 20, deux étriers 22 en forme de U sont positionnés à cheval sur le câble porteur 2 de part et d'autre du support 20 et fixés à celui-ci par quatre ensembles 24 de vis et d'écrous.

Dans le dispositif de suspension 10a illustré par la figure 2, la portion de réception 21 se présente sous la forme d'un crochet dont la concavité est tournée vers le haut pour recevoir un câble de faible diamètre, par exemple un câble nu. Les branches des étriers 22 sont orientées selon un axe horizontal X-X perpendiculaire à l'axe horizontal selon lequel s'étend le câble porteur 2. Dans le dispositif de suspension 10b illustré par la figure 3, la portion de réception 21 se présente sous la forme d'une gouttière agencée pour recevoir un câble porteur de diamètre plus important, par exemple un câble protégé comprenant une couche de revêtement, et les branches des étriers 22 sont orientées d'après un axe vertical Y-Y perpendiculaire à l'axe horizontal selon lequel s'étend le câble porteur 2.

Ainsi, le dispositif de suspension doit être choisi en fonction du diamètre du câble porteur, ce qui implique que le remplacement du câble porteur par un câble porteur de diamètre différent peut nécessiter un changement, fastidieux, de tous les dispositifs de suspension le long de la ligne sur la longueur du câble porteur, ce qui présente un premier inconvénient.

De plus, il est apparu que le serrage prescrit, de 25 Nm, des étriers sur le câble porteur n'est pas toujours respecté et génère un risque de cisaillement des brins qui fragilise le câble porteur et peut entraîner sa rupture, ce qui présente un second inconvénient.

Par ailleurs, la clé de serrage utilisée classiquement est une clé dynamométrique dont l'emploi pour le serrage de quatre écrous par support de câble constitue une importante perte de temps, ce qui présente un troisième inconvénient.

Enfin, le nombre de constituants des dispositifs de suspension connus est important, ce qui présente un quatrième inconvénient, notamment en termes de coût et de difficulté d'assemblage et de temps de montage.

La demande de brevet JP6171404A enseigne un dispositif de suspension d'un câble porteur de caténaire qui comprend une pièce d'attache reliée à un poteau et un support de câble relié à la pièce d'attache, qui supporte un câble porteur et constitue une bride de serrage. La demande de brevet EP0889568A1 enseigne un dispositif de suspension d'une ligne électrique aérienne.

La présente invention a pour but de remédier au moins en partie à ces inconvénients en proposant un dispositif de suspension d'un câble porteur qui soit à la fois simple, aisé à assembler, non-fragilisant pour le câble porteur et qui puisse recevoir différents types de câbles porteurs.

A cet effet, l'invention a pour objet un dispositif de suspension d'un câble porteur de caténaire au-dessus d'une ligne ferroviaire. Le dispositif de suspension comprend une pièce d'attache adaptée pour être reliée à un poteau et un support de câble relié à la pièce d'attache et agencé pour supporter le câble porteur. Le dispositif de suspension est remarquable en ce qu'il comprend au moins une bride de serrage du câble porteur comprenant une extrémité de fixation fixée sur le support de câble et une extrémité libre positionnée de manière à pincer le câble porteur.

Ainsi, l'utilisation d'une bride permet un serrage par pincement qui fragilise moins le câble qu'un serrage par cisaillement, évitant ainsi une fragilisation du câble porteur qui en entraînerait la rupture, et ce même en cas de serrage trop important. Une telle bride de serrage permet en outre au support de câble de recevoir des câbles porteurs de différents types, notamment de différents diamètres. De plus, le type de bride peut être adapté au type ou au diamètre du câble sans modification du support de câble qui peut ainsi être le même pour une pluralité de types de câbles porteurs. Par ailleurs, l'élément de suspension comprend moins de constituants puisque seuls une vis et un écrou peuvent être utilisés pour fixer la bride sur le support de câble, ce qui permet de réduire le temps de montage du dispositif de suspension sur le câble porteur.

De préférence, l'extrémité libre de la bride de serrage comporte une portion arquée adaptée pour être en contact avec le câble porteur.

De préférence encore, le support de câble comprend, au niveau de son extrémité libre, une plateforme s'étendant horizontalement et sur laquelle est fixée l'extrémité de fixation de la bride de serrage. Une telle plateforme est ainsi aisément accessible par un opérateur dans le but de fixer la bride de serrage sur le support de câble. Elle permet en outre de fixer la bride sensiblement horizontalement de sorte qu'elle exerce une force de serrage sensiblement verticale permettant de plaquer solidement le câble porteur contre le support de câble.

De manière avantageuse, la plateforme s'étend perpendiculairement à la direction selon laquelle s'étend le câble porteur de manière à permettre un pincement orthogonal du câble porteur.

Avantageusement, le support de câble comprend une gouttière agencée pour recevoir le câble porteur. Dans un tel cas, la plateforme peut par exemple s'étendre depuis la gouttière. La bride de serrage permet ainsi de pincer le câble porteur disposé dans la gouttière de sorte à le maintenir.

De préférence, la gouttière a une section en forme de V, par exemple formant un angle d'environ 90°.

Avantageusement, le support de câble comprend un bras sensiblement en forme de C aisé à fabriquer.

Selon une caractéristique de l'invention, le bras et la plateforme sont sensiblement de la même largeur que la bride de serrage, ce qui permet un montage aisé et efficace de la bride sur la plateforme.

De préférence, le support de câble est relié à la pièce d'attache par une liaison pivot. Ainsi, il n'est plus nécessaire d'utiliser un cardan intermédiaire entre la pièce d'attache et le support de câble, ce qui réduit de facto le nombre de constituants du dispositif.

Selon une forme de réalisation de l'invention, la pièce d'attache comprend, au niveau de son extrémité de liaison à la pièce de support, une chape comportant deux orifices traversant de part en part, l'extrémité supérieure du support de câble étant fixée dans la chape par un système d'axe de fixation et de goupille, l'axe de fixation étant disposé dans les orifices de la chape et bloqué en rotation par la goupille dans l'un des bras de la chape.

Selon une caractéristique de l'invention, la gouttière s'étend de part et d'autre du bras du support de câble selon une direction parallèle à l'axe de fixation. Le câble porteur peut ainsi être disposé sur toute la longueur de la gouttière qui offre ainsi un support conséquent au câble.

Selon une autre caractéristique de l'invention, le dispositif de suspension comprend une bague d'articulation montée entre le support de câble et l'axe de fixation, agencée pour autoriser un balancement par rapport à l'axe de fixation du support de câble dans la pièce d'attache formant ainsi une liaison pivot. Un tel balancement permet d'absorber une partie des forces transmises lors du passage d'un pantographe ou sous l'action du vent et donc de réduire les contraintes sur les différents éléments du dispositif de suspension, notamment sur le support de câble et la pièce d'attache.

L'invention concerne aussi un ensemble formé d'un dispositif tel que défini ci-dessus et d'un jeu de brides de dimensions différentes configurées chacune pour serrer des câbles de diamètres différents. Ainsi un même dispositif de suspension peut être utilisé avec des brides de serrages différents et donc avec des câbles différents.

L'invention concerne de plus un ensemble d'un dispositif de suspension tel que défini ci-dessus et d'un câble porteur disposé et maintenu dans le support de câble du dispositif de suspension par la bride de serrage.

L'invention concerne en outre un système de maintien d'un câble porteur de caténaire au-dessus d'une ligne ferroviaire comportant un hauban et une console adaptés pour être montés sur un poteau et un dispositif de suspension tel que défini ci-dessus dont la pièce d'attache est reliée au hauban et à la console.

L'invention concerne aussi un procédé de fixation d'un câble porteur sur un dispositif de suspension tel que défini ci-dessus comprenant :
a. une étape de disposition du câble porteur dans le support de câble du dispositif
b. une étape de mise en place de l'extrémité libre de la bride de serrage sur le câble porteur et
c. une étape de fixation de l'extrémité de fixation de la bride de serrage sur le support de câble de manière à pincer le câble porteur.

D'autres caractéristiques et avantages de l'invention apparaîtront lors de la description qui suit faite en regard des figures annexées données à titre d'exemples non limitatifs et dans lesquelles des références identiques sont données à des objets semblables.
La figure 1 illustre une caténaire suspendue au-dessus d'une ligne ferroviaire par une pluralité de poteaux.
La figure 2 illustre un premier dispositif de suspension de l'art antérieur.
La figure 3 illustre un second dispositif de suspension de l'art antérieur.
La figure 4 représente schématiquement en vue de côté une première forme de réalisation du dispositif de suspension pour un câble porteur nu selon l'invention.
La figure 5 est une vue en perspective du dispositif de la figure 4.
La figure 6 représente schématiquement en vue de côté une seconde forme de réalisation du dispositif de suspension pour un câble porteur protégé selon l'invention.
La figure 7 est une vue en perspective du dispositif de la figure 6.
La figure 8 représente schématiquement en vue de côté une première forme de réalisation d'une bride de serrage pour un câble porteur nu selon l'invention.
La figure 9 représente schématiquement en vue de côté une seconde forme de réalisation d'une bride de serrage pour un câble porteur protégé selon l'invention.

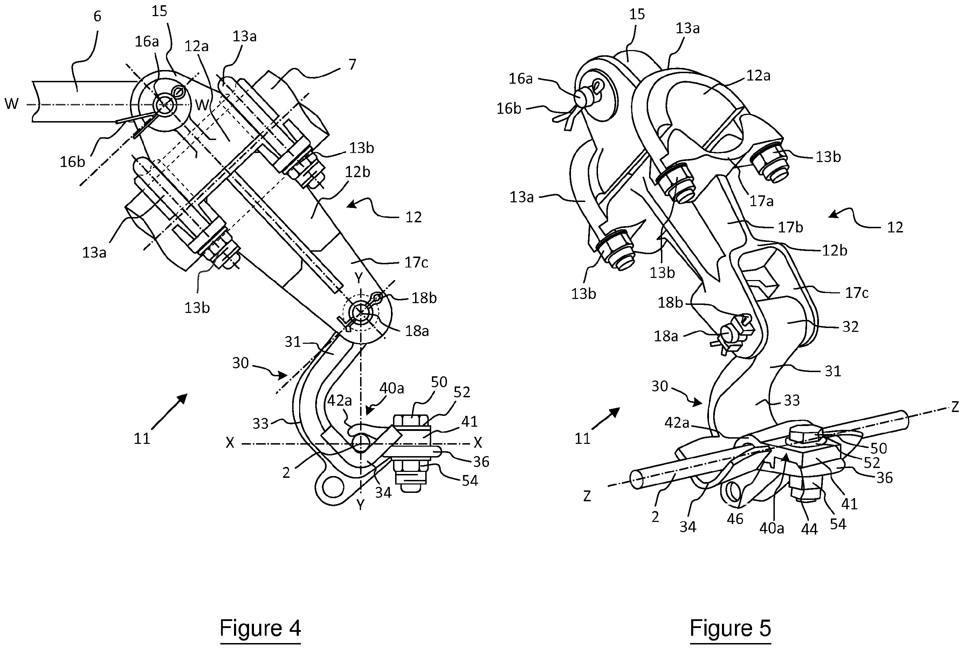

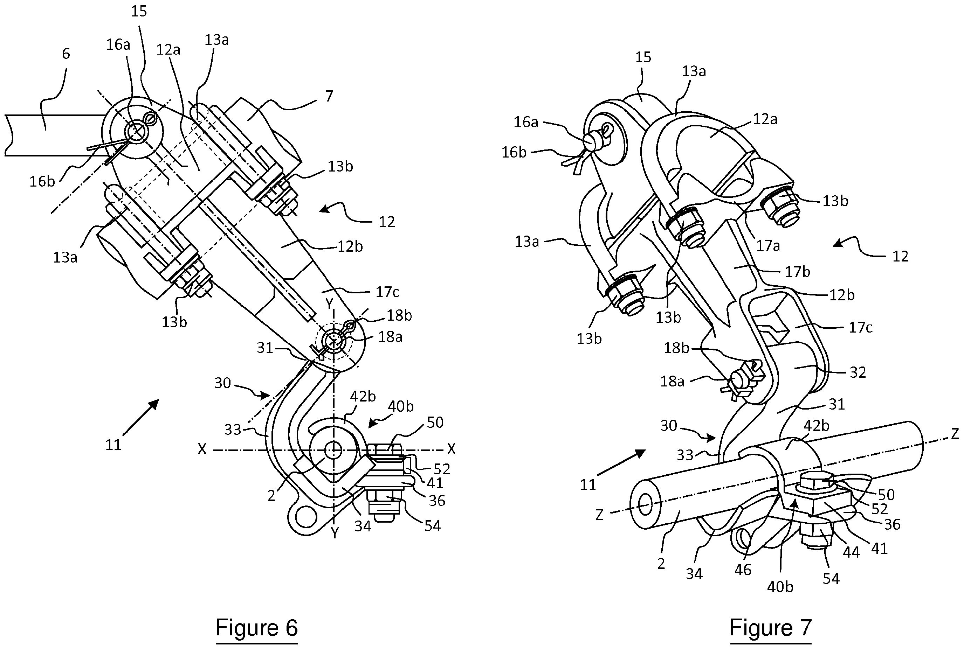

La figure 1 représente la suspension d'une caténaire comprenant un fil de contact 1 et un câble porteur 2. Le fil de contact 1 est suspendu au câble porteur 2 par une pluralité de pendules 5. Le câble porteur 2 est suspendu à chaque poteau 4 disposé le long de la voie ferroviaire par un système de maintien 3. Le câble porteur 2 s'étend horizontalement selon un axe Z-Z illustré aux figures 5 et 7. Un tel système de maintien 3 comprend un hauban 6, une console 7 et un dispositif de suspension 11 agencé pour relier le hauban 6, la console 7 et le câble porteur 2.

Le hauban 6 est disposé sensiblement horizontalement entre le poteau 4 et le dispositif de suspension 11 selon un axe horizontal X-X, orthogonalement à l'axe Z-Z selon lequel s'étend le câble porteur 2.

La console 7 est disposée obliquement entre le poteau 4 et le dispositif de suspension 11 de sorte à former, avec le hauban 6, un triangle de maintien du dispositif de suspension 11 au poteau 4 s'étendant dans un plan transversal à l'axe Z-Z selon lequel s'étend le câble porteur 2.

Le dispositif de suspension 11 selon l'invention illustré par les figures 4 à 7 comprend une pièce d'attache 12 reliant le hauban 6 et la console 7 et un support de câble 30, relié à la pièce d'attache 12, dans lequel est disposé le câble porteur 2.

La pièce d'attache 12 comprend un capot 12a et un corps 12b. Par la suite, les termes « inférieur » et « supérieur » sont utilisés relativement à un dispositif de suspension 11 en position d'utilisation dans un système de maintien 3 d'une caténaire suspendue au-dessus d'une voie ferrée.

En référence à la figure 4, le capot 12a est agencé, d'une part, pour recevoir une extrémité d'attache du hauban 6 et, d'autre part, pour maintenir une portion de la console 7 par coopération avec le corps 12b au moyen d'un système d'étriers 13a et d'écrous 13b comme cela sera détaillé par la suite. Chaque étrier 13a se présente sous la forme d'une pièce en forme de U dont les extrémités filetées sont fixées sur le corps 12b par les écrous 13b.

Afin de réaliser le montage du hauban 6 sur la pièce d'attache 12, le capot 12a comprend, au niveau de sa partie supérieure, une chape 15 comportant deux orifices traversant latéralement et agencés pour recevoir un axe de fixation 16a du hauban 6 maintenu par une goupille 16b.

Comme illustré à la figure 5, le capot 12a comprend, dans sa partie inférieure, une portion arrondie agencée pour recevoir une portion de la console 7 de section circulaire. De même, le corps 12b comprend, dans sa partie supérieure, une portion arrondie 17a agencée pour recevoir une portion de la console 7 de section circulaire. Autrement dit, le capot 12a et le corps 12b permettent de maintenir fermement la portion de la console 7 par complémentarité de formes. La console 7 est solidarisée entre le capot 12a et le corps 12b par deux étriers 13a en forme de U entourant le capot 12a et fixés au niveau de la partie supérieure du corps 12b par les écrous 13b.

Le corps 12b comprend en outre, au niveau de sa partie inférieure, une chape 17c de liaison avec le support de câble 30 reliée à la portion arrondie 17a par un bras de liaison 17b. La chape 17c comprend deux orifices traversant de chaque côté agencés pour recevoir un axe de fixation 18a bloqué en rotation par une goupille 18b dans l'un des bras de la chape 17c.

Contrairement aux dispositifs de suspension de l'art antérieur comportant un cardan, le support de câble 30 du dispositif de suspension 11 selon l'invention est directement monté sur la pièce d'attache 12 par une liaison pivot d'axe horizontal comportant l'axe de fixation 18a et la goupille 18b, comme illustré par les figures 4 à 7. Néanmoins, il va de soit qu'un dispositif de suspension selon l'invention pourrait aussi comprendre un cardan entre le support de câble et la pièce d'attache.

Dans une forme de réalisation particulière, une bague d'articulation, non représentée, est insérée, par exemple à force, dans la partie supérieure 32 du support de câble 30, puis installée dans la chape 17c de la pièce d'attache 12 de sorte à limiter l'usure tout en autorisant un balancement du support de câble 30 autour de l'axe de fixation 18a.

Dans cette forme de réalisation, le support de câble 30 se présente sous la forme d'un bras coudé 31 monobloc ayant sensiblement la forme d'un C. Le bras 31 est fixé au niveau de son extrémité supérieure 32 à la chape de liaison 17c par l'intermédiaire de l'axe de fixation 18a et bloqué en rotation par la goupille 18b comme illustré à la figure 5.

Le bras 31 comprend, au niveau de sa partie inférieure, une gouttière 34 configurée pour recevoir le câble porteur 2. La gouttière 34 possède une section sensiblement en forme de V dont l'ouverture est d'environ 90° et est configurée pour recevoir des câbles de différents diamètres. La gouttière 34 s'étend selon la direction Z-Z selon laquelle s'étend le câble porteur 2, c'est-à-dire, parallèlement à l'axe de fixation 18a. La longueur de la gouttière 34 est supérieure à la largeur du bras 31 définie selon l'axe Z-Z de manière à fournir un effort de maintien réparti sur le câble porteur 2.

Comme illustré par les figures 4 et 6, le bras 31 et la gouttière 34 sont agencés de sorte que l'axe du câble porteur 2 et l'axe de fixation 18a du support de câble 30 sur la pièce d'attache 12 soient sensiblement dans le même plan vertical Y-Y.

Le support de câble 30 du dispositif de suspension 11 selon l'invention comprend en outre, au niveau de son extrémité libre, une plateforme 36 agencée pour recevoir une bride de serrage 40a, 40b du câble porteur 2 illustrée par les figures 4 à 9. La plateforme 36 s'étend sensiblement parallèlement à un axe horizontal X-X, c'est-à-dire, perpendiculairement à l'axe Z-Z selon lequel s'étend le câble porteur 2.

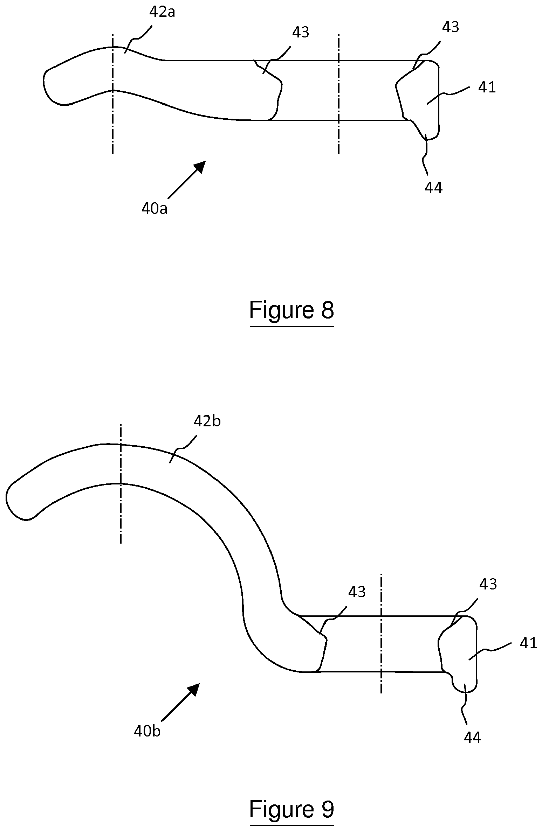

Les brides de serrage 40a et 40b illustrées respectivement par les figures 8 et 9 se présentent chacune sous la forme d'une pièce longitudinale, de préférence en métal, comportant une extrémité de fixation 41 reliée à la plateforme 36 et une extrémité libre en appui sur le câble porteur 2 pour le pincer afin de le maintenir dans la gouttière 34. De manière particulière, la bride de serrage 40a, 40b comporte une portion de maintien arquée 42a, 42b agencée pour être positionnée sur la périphérie du câble porteur 2 de manière à épouser sa forme et limiter son débattement. A cet effet, la courbure de la portion de maintien arquée est adaptée à celle du câble porteur 2.

L'extrémité de fixation 41 comprend un orifice de réception 43 d'une vis 50 et une butée 44 d'appui de la bride de serrage 40a, 40b sur la plateforme 36. La bride de serrage 40a, 40b est fixée sur la plateforme 36 au niveau de son extrémité de fixation par un système comprenant une vis 50, une rondelle d'appui sphérique 52 et un écrou 54. De plus, la rondelle d'appui sphérique 52 permet de garantir une répartition uniforme du serrage sur la plateforme 36 et sur le câble porteur 2 grâce à l'auto-centrage de la vis 50.

Comme illustré par les figures 5 et 7, la largeur de la bride de serrage 40a, 40b est sensiblement égale à celle de la plateforme 36 et à celle du bras 32. De plus, la bride de serrage 40a, 40b est logée en appui dans un évidement 46 ménagé dans la gouttière 34 de sorte à être bloquée en translation dans la direction longitudinale de l'axe Z-Z. Ainsi, la bride de serrage 40a, 40b n'est pas entraînée par le câble porteur 2 si celui-ci subit un déplacement le long de l'axe Z-Z.

La portion de maintien 42a illustrée par la figure 8 est relativement peu arquée, en d'autres termes son rayon de courbure est faible, de sorte à autoriser le maintien de câbles porteur de faible diamètre.

En revanche, la portion de maintien 42b illustrée par la figure 9 est relativement arquée, en d'autres termes son rayon de courbure est élevé, de sorte à autoriser le maintien de câbles porteur de diamètre important. La bride de serrage 40a, 40b peut ainsi être choisie en fonction du type et surtout du diamètre du câble porteur 2.

Dans les deux formes de réalisation illustrées de la bride de serrage selon l'invention, la portion de maintien 42a, 42b est concave de sorte à épouser la forme du câble porteur 2.

Cependant, dans d'autres formes de réalisation, on peut imaginer que la portion de maintien est plate, convexe ou de tout autre forme et/ou bien comprend des éléments supplémentaires de maintien du câble porteur 2.

Afin de procéder à la fixation du câble porteur 2 sur le support de câble 30 du dispositif de suspension 11, le câble porteur 2 est tout d'abord disposé dans le support de câble 30 puis la bride de serrage 40a, 40b est fixée sur la plateforme 36 du support de câble 30 par la vis 50, la rondelle d'appui sphérique 52 et l'écrou 54 de manière à ce que la portion arquée 42a, 42b viennent pincer et maintenir le câble porteur 2.

Ainsi, lors de l'utilisation du dispositif de suspension selon l'invention, l'élasticité de la bride de serrage, conférée notamment par son extrémité libre de pincement, permet à la fois de maintenir le câble porteur dans la gouttière tout en évitant des contraintes sur le câble porteur pouvant en entraîner la rupture, contrairement aux étriers de l'art antérieur. Un tel débattement peut permettre d'utiliser par exemple une même bride pour pincer des types de câbles de diamètres différents. Enfin, la fixation de la bride de serrage par une seule de ses extrémités autorise un montage ou un changement aisé de la bride de manière à s'adapter au diamètre du câble porteur.

## Revendications

1. Dispositif de suspension d'un câble porteur (2) de caténaire au-dessus d'une ligne ferroviaire, le dispositif de suspension (11) comprenant une pièce d'attache (12) adaptée pour être reliée à un poteau (4) et un support de câble (30) relié à la pièce d'attache (12) et agencé pour supporter le câble porteur (2), le dispositif (11) comprenant au moins une bride de serrage (40a, 40b) du câble porteur (2) comprenant une extrémité de fixation (41) fixée sur le support de câble (30), dispositif (11) **caractérisé en ce que** la bride de serrage (40a, 40b) du câble porteur (2) comprend une extrémité libre (42) positionnée de manière à pincer le câble porteur (2).

2. Dispositif selon la revendication 1, dans lequel l'extrémité libre (42) de la bride de serrage (40a, 40b) comporte une portion arquée (42a, 42b) adaptée pour être en contact avec le câble porteur (2).

3. Dispositif selon l'une des revendications précédentes, dans lequel le support de câble (30) comprend, au niveau de son extrémité libre, une plateforme (36) s'étendant horizontalement et sur laquelle est fixée l'extrémité de fixation (41) de la bride de serrage (40a, 40b).

4. Dispositif selon l'une des revendications précédentes, dans lequel le support de câble (30) comprend une gouttière (34) agencée pour recevoir le câble porteur (2).

5. Dispositif selon les revendications 3 et 4, dans lequel la plateforme (36) s'étend depuis la gouttière (34).

6. Dispositif selon l'une des revendications précédentes, dans lequel le support de câble (30) présente sensiblement une forme de C.

7. Dispositif selon l'une des revendications précédentes, dans lequel le support de câble (30) est relié à la pièce d'attache (12) par une liaison pivot.

8. Ensemble comprenant un dispositif de suspension (11) selon l'une des revendications 1 à 7 et un câble porteur (2) disposé et maintenu dans le support de câble (30) du dispositif de suspension (11) par la bride de serrage (40a, 40b).

9. Système de maintien (3) d'un câble porteur (2) de caténaire au-dessus d'une ligne ferroviaire comportant un hauban (6) et une console (7) adaptés pour être montés sur un poteau (4) et un dispositif de suspension (11) selon l'une des revendications 1 à 7 dont la pièce d'attache (12) est reliée au hauban (6) et à la console (7).

10. Procédé de fixation d'un câble porteur (2) sur un dispositif de suspension (11) selon l'une des revendications 1 à 7 comprenant :
a. une étape de disposition du câble porteur (2) dans le support de câble (30) du dispositif (11)
b. une étape de mise en place de l'extrémité libre (42) de la bride de serrage (40a, 40b) sur le câble porteur (2) et
c. une étape de fixation de l'extrémité de fixation de la bride de serrage (40a, 40b) sur le support de câble (30) de manière à pincer le câble porteur (2).

## Patentansprüche

1. Aufhängevorrichtung eines Oberleitungstragseils (2) über einer Eisenbahnstrecke, wobei die Aufhängevorrichtung (11) ein Befestigungsteil (12) umfasst, das geeignet ist, um mit einem Pfosten (4) verbunden zu sein, und einen Kabelträger (30), der mit dem Befestigungsteil (12) verbunden und ausgebildet ist, um das Tragseil (2) zu stützen, wobei die Vorrichtung (11) mindestens einen Spannflansch (40a, 40b) des Tragseils (2) umfasst, der ein auf dem Kabelträger (30) befestigtes Befestigungsende (41) umfasst, wobei die Vorrichtung (11) **dadurch gekennzeichnet ist, dass** der Spannflansch (40a, 40b) des Kabelträgers (2) ein freies Ende (42) umfasst, das derart positioniert ist, dass das Tragseil (2) eingeklemmt ist.

2. Vorrichtung nach Anspruch 1, wobei das freie Ende (42) des Spannflanschs (40a, 40b) einen gebogenen Abschnitt (42a, 42b) aufweist, der geeignet ist, um mit dem Tragseil (2) im Kontakt zu sein.

3. Vorrichtung nach einem der vorangehenden Ansprüche, wobei der Kabelträger (30) im Bereich seines freien Endes eine Plattform (36) umfasst, die sich horizontal erstreckt und auf der das Befestigungsende (41) des Spannflanschs (40a, 40b) befestigt ist.

4. Vorrichtung nach einem der vorangehenden Ansprüche, wobei der Kabelträger (30) eine Rinne (34) umfasst, die ausgebildet ist, um das Tragseil (2) zu empfangen.

5. Vorrichtung nach den Ansprüchen 3 und 4, wobei sich die Plattform (36) ab der Rinne (34) erstreckt.

6. Vorrichtung nach einem der vorangehenden Ansprüche, wobei der Kabelträger (30) etwa eine C-Form aufweist.

7. Vorrichtung nach einem der vorangehenden Ansprüche, wobei der Kabelträger (30) mit dem Befestigungsteil (12) durch eine Gelenkverbindung verbunden ist.

8. Einheit, umfassend eine Aufhängevorrichtung (11) nach einem der Ansprüche 1 bis 7 und ein Tragseil (2), das in dem Kabelträger (30) der Aufhängevorrichtung (11) angeordnet ist und durch den Spannflansch (40a, 40b) gehalten wird.

9. Haltesystem (3) eines Oberleitungstragseils (2) über einer Eisenbahnstrecke, umfassend ein Spannseil (6) und eine Konsole (7), die geeignet sind, um auf einem Pfosten (4) angebracht zu sein, und eine Aufhängevorrichtung (11) nach einem der Ansprüche 1 bis 7, deren Befestigungsteil (12) mit dem Spannseil (6) und mit der Konsole (7) verbunden ist.

10. Verfahren zur Befestigung eines Tragseils (2) auf einer Aufhängevorrichtung (11) nach einem der Ansprüche 1 bis 7, umfassend:
a. einen Anordnungsschritt des Tragseils (2) in dem Kabelträger (30) der Vorrichtung (11),
b. einen Platzierungsschritt des freien Endes (42) des Spannflanschs (40a, 40b) auf dem Tragseil (2) und
c. einen Befestigungsschritt des Befestigungsendes des Spannflanschs (40a, 40b) auf dem Kabelträger (30), so dass das Tragseil (2) eingeklemmt wird.

## Claims

1. Device for suspending a catenary-supporting cable (2) above a railway line, the suspension device (11) comprising a fastening part (12) adapted to be connected to a pole (4) and a cable support (30) connected to the fastening part (12) and arranged to support the supporting cable (2), the device (11) comprising at least one strap (40a, 40b) for clamping the supporting cable (2) comprising a securing end (41) secured on the cable support (30), device (11) **characterised in that** the strap (40a, 40b) for clamping the supporting cable (2) comprises a free end (42) positioned so as to clamp the supporting cable (2).

2. Device according to claim 1, wherein the free end (42) of the clamping strap (40a, 40b) comprises an arched portion (42a, 42b) adapted to be in contact with the supporting cable (2).

3. Device according to one of the preceding claims, wherein the cable support (30) comprises, at the level of the free end thereof, a platform (36) extending horizontally and whereon is secured the securing end (41) of the clamping strap (40a, 40b).

4. Device according to one of the preceding claims, wherein the cable support (30) comprises a trough (34) arranged to receive the supporting cable (2).

5. Device according to claims 3 and 4, wherein the platform (36) extends from the trough (34).

6. Device according to one of the preceding claims, wherein the cable support (30) substantially has a C-shape.

7. Device according to one of the preceding claims, wherein the cable support (30) is connected to the fastening part (12) by a pivot connection.

8. Unit comprising a suspension device (11) according to one of claims 1 to 7 and a supporting cable (2) arranged and held in the cable support (30) of the suspension device (11) by the clamping strap (40a, 40b).

9. System (3) for holding a catenary-supporting cable (2) above a railway line comprising a brace (6) and a console (7) adapted to be assembled on a pole (4) and a suspension device (11) according to one of claims 1 to 7, of which the fastening part (12) is connected to the brace (6) and to the console (7).

10. Method for securing a supporting cable (2) on a suspension device (11) according to one of claims 1 to 7 comprising:
a. a step of arranging the supporting cable (2) in the cable support (30) of the device (11)
b. a step of implementing the free end (42) of the clamping strap (40a, 40b) on the supporting cable (2) and
c. a step of securing the securing end of the clamping strap (40a, 40b) on the cable support (30) so as to clamp the supporting cable (2).
